# EUROPÄISCHE PATENTSCHRIFT

(11) **EP 0 699 151 B1**
(45) Veröffentlichungstag und Bekanntmachung des Hinweises auf die Patenterteilung: **14.03.2001**
(21) Anmeldenummer: 95912134.4
(22) Anmeldetag: 14.03.1995
(51) Int. Cl.: B62D 15/02, G01B 7/30, G01D 5/249

(54) **SENSOR ZUR ERFASSUNG DES LENKWINKELS**
STEERING ANGLE DETECTION SENSOR
DETECTEUR POUR LA DETERMINATION DE L'ANGLE DE BRAQUAGE

(30) Priorität: 23.03.1994 DE 4409892
(43) Veröffentlichungstag der Anmeldung: 06.03.1996
(73) Patentinhaber: ROBERT BOSCH GMBH, 70442 Stuttgart (DE)
(72) Erfinder: KAISER, Harry, D-71706 Markgröningen (DE); ABENDROTH, Manfred, D-71672 Marbach (DE)
(86) Internationale Anmeldenummer: DE9500343
(87) Internationale Veröffentlichungsnummer: WO9525660

(56) Entgegenhaltungen:
- EP-A- 0 477 653
- WO-A-92/17719
- US-A- 5 248 939
- MACHINE DESIGN, Bd. 57,Nr. 20, September 1985 OHIO, USA, Seiten 89-90, J.D. MONTGOMERY 'Optical Shaft Encoders'
- I & CS - INDUSTRIAL AND PROCESS CONTROL MAGAZINE, Bd. 62,Nr. 2, Februar 1989 Seiten 67-69, XP 000051470 WOLF G ET AL 'ABSOLUTE ENCODERS FIND INCREASED APPLICATION'

## Beschreibung

### Stand der Technik

Die Erfindung geht aus von einem Sensor zur Erfassung des Lenkwinkels, beispielsweise eines Kraftfahrzeuges, nach der Gattung des Hauptanspruchs.

Für bestimmte Sicherheitssysteme in Kraftfahrzeugen (z.B. automatische Hinterachslenkung, Fahrdynamikregelung) wird aus Sicherheitsgründen sofort nach Einschalten des Fahrzeuges die aktuelle Lenkradposition benötigt. Insbesondere Sensoren mit inkrementeller Arbeitsweise, bei denen die Winkelinkremente in nur einer Spur angeordnet sind, können diese Forderung nur unzureichend erfüllen, da in jedem Fall eine Indexmarke erreicht werden muß, bevor der Sensor einen gültigen Meßwert liefert. Weiterhin muß ein solcher Lenkradwinkelsensor einen Meßwert im Bereich von ± 720° liefern. Dies bedeutet, daß ein zweites System innerhalb des Sensors vorhanden sein muß, welches die über eine Umdrehung hinausgehenden Winkelwerte erfaßt. Auch dieses System muß sofort nach Zündung "Ein" einen gültigen Wert liefern.

Analoge Sensorsysteme wie Potentiometer (Patentschrift EP-A-0 477 653) erfüllen als solche diese Forderung, haben jedoch den Nachteil, daß sie nicht verschleißfrei arbeiten und aus dieser Sicht die Anforderungen an ein Sicherheitssystem nicht erfüllen.

Lösungen für digitale absolut messende Systeme (Abtastung mehrerer Codespuren innerhalb einer Umdrehung) sind zu aufwendig und lassen sich mit bekannten Mitteln nicht oder nur schwer im vorhandenen Bauraum kostengünstig unterbringen (EP-A-0 489 350).

Aus der DE-P 42 20 883 ist ein Lenkwinkelsensor bekannt, bei dem zwei Feinsignale erzeugt werden, die gegeneinander verschoben sind und sich alle 360° wiederholen. Weiterhin wird ein Grobsignal erzeugt, das sich über einen Winkelbereich von vier Umdrehungen des Lenkrades erstreckt und erkennen läßt, in welcher Umdrehung sich das Lenkrad befindet.

Eine weitere Lösung beschreibt einen Absolutwinkelgeber auf der Basis eines einspurigen inkrementellen Codes, der in Verbindung mit mehreren Abtastern einen Absolutwert innerhalb einer Lenkradumdrehung liefert (Patentschrift EP-B-0 377 097). Bei den zuletzt genannten Lösungen fehlt jedoch die Erfassung der über 360° hinausgehenden Lenkradwinkel. Man behilft sich bisher damit, nach einer anfänglichen Initialisierung des Winkelmeßsystems den zuletzt gültigen Winkelwert einschließlich der Zahl der Lenkradumdrehungen in geeigneter Weise (meist mittels elektronischem Speicher) zu speichern und greift beim erneuten Einschalten des Fahrzeuges auf den beim Ausschalten abgelegten Wert zurück. Dabei wird vorausgesetzt, daß sich die Stellung des Lenkrades nach Zündung "Aus" nicht mehr verändert. Da dies aber nicht in jedem Falle ausgeschlossen werden kann, wird vielfach der Sensor nach Zündung "Aus" nicht vom Bordnetz des Fahrzeuges genommen, so daß auch nach Zündung "Aus" Veränderungen der Winkelstellung des Lenkrades erfaßt werden können. In solchen Fällen werden die Sensoren in einen Stromsparmodus geschaltet, damit sich die Batterie des Fahrzeuges nicht zu schnell entlädt. Als Risiko bleibt immer der Ausfall der Versorgungsspannung bestehen, weil dann in solchen Fällen der Sensor seine Information über die Zahl der Lenkradumdrehungen verliert. Nach solchen Ereignissen muß der Sensor erneut durch eine besondere Prozedur initialisiert werden, was in der Regel nur in Spezialwerkstätten erfolgen kann.

Es wäre also ein Sensor wünschenswert, der bei Zündung "Ein" sofort den Absolutwinkel innerhalb des Lenkradwinkelbereiches von ± 720° liefern würde. Wünschenswert wäre ebenso eine rein digitale Arbeitsweise des Sensors innerhalb des gesamten Lenkradwinkelbereiches, um aufwendige Abgleichprozeduren zu vermeiden.

Aus der Druckschrift I & CS, Band 62, (1998) Febr., No. 2, Radnor, PA, US ist eine Winkelgeberanordnung bekannt, die eine Codescheibe umfaßt, mit einer Vielzahl von Codespuren, die mit Hilfe von Aufnehmern, beispielsweise Fotodetektoren abgetastet wird, wobei die Zahl der Codespuren und die Zahl der Fotodetektoren gleich ist. Mit Hilfe einer solchen Geberscheibe lassen sich vorgebbare Codes, beispielsweise Binärcodes oder Greycodes mit einer hohen Auflösung erzeugen. Durch Einsatz eines Getriebes mit einer Übersetzung von beispielsweise acht zu eins kann die Auflösung um einen Faktor acht verbessert werden, da sich die Scheibe dann achtmal dreht, während sich eine zugehörige Welle nur einmal dreht. Damit eindeutig erkennbar wird, in welcher Umdrehung sich die Scheibe befindet, ist auf der Welle ein weiterer Geber mit zusätzlichen Codespuren vorhanden, die ebenfalls mit Hilfe dreier Aufnehmer abgetastet werden. Durch Kombination der Ausgangssignale dieser Aufnehmer ist erkennbar, in welcher Umdrehung sich die eigentliche Codescheibe befindet. Ein Einsatz als Lenkwinkelsensor ist nicht vorgesehen.

Aus der US-PS 5,248,939 ist ein Winkelgeber bekannt, der zur Bestimmung eines Lenkwinkels bzw. des Drehwinkels des Lenkrades eingesetzt wird. Ein solcher Winkelgeber weist mehrere ineinander verdrehbare Körper auf, wobei einer dieser Körper einen Code trägt, der mit Hilfe von Sensoren, die auf dem - anderen Körper befestigt sind, abgetastet werden. Durch Verknüpfung der Sensorsignale läßt sich der Drehwinkel bestimmen.

### Vorteile der Erfindung

Der erfindungsgemäße Sensor zur Erfassung des Lenkwinkels beispielsweise bei einem Kraftfahrzeug, mit den Merkmalen des Anspruchs 1 hat den Vorteil, daß eine eindeutige Zuordnung zwischen Fein- und Grobsignal über den gesamten zu erfassenden Winkelbereich möglich ist. Es gibt daher keine Winkelbereiche mehr, bei denen keine eindeutige Aussage über die Umdrehung, in der sich die Lenksäule befindet, gemacht werden kann.

Besonders vorteilhaft ist, daß durch den aus drei Spuren gebildeten Code im Grobsystem die beim Zusammenbau auftretenden Toleranzanforderungen weitestgehend behoben werden.

Die Auswertung des Grobsystemes sowie die Verarbeitung der digitalen Fein- und Grobsignale lassen sich mit Hilfe eines einzigen Mikrocontrollers realisieren. Die konstruktive Anordnung der Sensoren für das Fein- und Grobsystem auf einem gemeinsamen Verdrahtungsträger ermöglicht einen einfachen Aufbau des Gesamtsystems.

Besonders vorteilhaft ist, daß als Aufnehmer Hallelemente mit schaltendem Ausgang sowohl für das Fein- als auch das Grobsystem verwendet werden können.

Durch die in den Unteransprüchen aufgeführten Maßnahmen sind vorteilhafte Weiterbildungen des erfindungsgemäßen Sensors möglich.

### Zeichnung

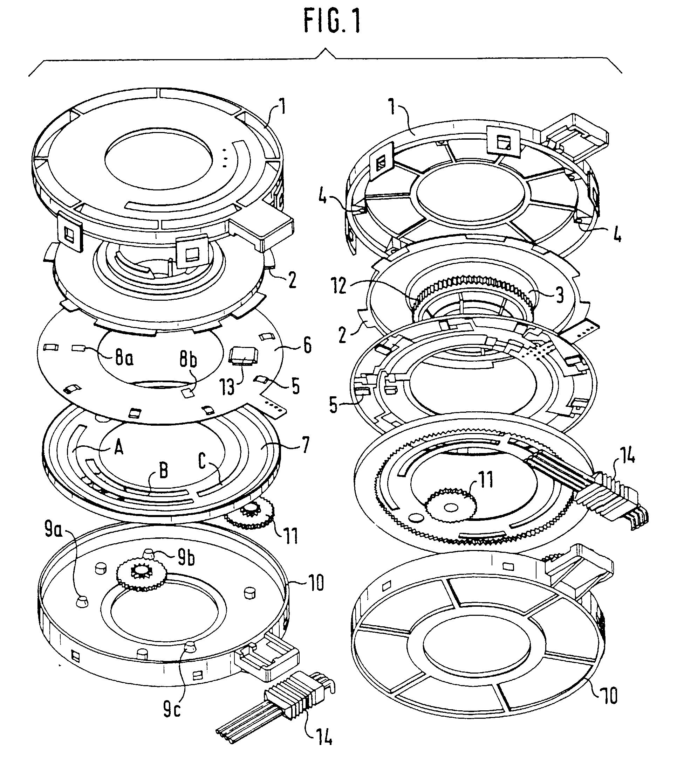

Ein Ausführungsbeispiel der Erfindung ist in der Figur dargestellt und wird in der nachfolgenden Beschreibung näher erläutert. Dabei zeigt Figur 1 ein konkretes Ausführungsbeispiel der Erfindung, in Figur 2 ist der Verlauf des Feinsignales sowie der Grobsignale über den Winkel dargestellt, wobei das Grobsignal mit Hilfe zweier Codespuren erzeugt wird. In Figur 3a ist derselbe Sachverhalt dargestellt, wobei zur Erzeugung des Grobsignales nun drei Codespuren vorhanden sind. In Figur 3b sind die mit der erfindungsgemäßen Anordnung erzielbaren Codierungen aufgetragen.

### Beschreibung

Das im folgenden beschriebene System löst erfindungsgemäß die Aufgabe.

Die Erfindung betrifft eine Vorrichtung zur Bestimmung des Drehwinkels eines Fahrzeuglenkrades mit einem lenkradseitig angeordneten Sensor, bestehend aus einer ersten Codescheibe, die in einer einspurigen Streifenstruktur einen sog. Gray-Code trägt, mit dem der Absolutwert des Drehwinkels innerhalb einer Lenkradumdrehung erkannt werden kann und einer zweiten Codescheibe, die in Verbindung mit einem Untersetzungsgetriebe die Erkennung des Drehwinkels für Winkel größer als 360° ermöglicht.

### Beschreibung des Feinsystems zur Erfassung des Winkels innerhalb einer Lenkradumdrehung

Das Feinsystem besteht aus einer Scheibe, die an ihrem Umfang innerhalb einer Spur Ausschnitte enthält und mehreren, in gleichmäßigen Winkelabständen angeordneten Sensoren, so daß im Zusammenwirken von Scheibe und Sensoren ein Code entsteht, der eine Absolutwerterkennung innerhalb einer Lenkradumdrehung ermöglicht. Im Ausführungsbeispiel besteht die Scheibe aus magnetisch gut leitendem Blech und ist fest mit der Lenkwelle verbunden (z.B. über eine formschlüssige Verbindung). Die Aussparungen in der sich mit der Lenkwelle drehenden Scheibe werden von neun am Umfang angeordneten Sensoren (Magnet-Hall-Schranken) abgetastet, wobei eine "1" entsteht, wenn zwischen Magnet und Hall-Schalter kein Blech ist, und eine "0" entsteht, wenn der Magnetfluß durch ein Blechsegment der Scheibe unterbrochen ist.

Die Auflösung bzw. Schaltgenauigkeit der Magnet-Hall-Schranke ermöglicht eine ausreichende Winkelauflösung von etwa 2°. Der Vorteil einer solchen Anordnung liegt in der Robustheit, insbesondere der Verschmutzungsunanfälligkeit und dem großen Temperaturbereich, in dem solche Magnet-Hall-Schranken zuverlässig arbeiten. Fremdeinflüsse können weitgehend ausgeschlossen werden. Die Anordnung läßt sich außerordentlich flach aufbauen.

### Beschreibung des Grobsystems

In Kraftfahrzeugen ist ständig der Lenkradwinkel innerhalb von ± 2 Lenkradumdrehungen zu messen, d.h., das Lenkrad muß mehrfach gedreht werden, um vom linken zum rechten Anschlag zu gelangen.

Zur Detektion der Umdrehungszahl sind verschiedene Lösungen möglich. Erfindungsgemäß wird im Ausführungsbeispiel eine zweite Codescheibe vorgesehen, die durch ein Getriebe, das einen direkten Zusammenhang zwischen Lenkraddrehwinkel und Anzahl der Umdrehungen herstellt, angetrieben wird. Beim Getriebe handelt es sich vorzugsweise um ein Planetenumlaufgetriebe mit einer Untersetzung von exakt 4 : 1. Dieses Untersetzungsverhältnis ist günstig, um einen Betrieb des Sensors ohne Anschlag ermöglichen zu können. So ergeben sich nach jeweils 4 Lenkradumdrehungen immer gleiche Ausgangsbedingungen.

Die Grobcodescheibe besteht wie der Feinsignalgeber aus magnetisch gut leitendem Blech. Sie trägt die Codespuren (Ausschnitte) A, B, C, die ebenfalls mit Magnet-Hall-Schranken abgetastet werden. Drei Codespuren sind erforderlich, um die Eindeutigkeit der Zuordnung von Grob- und Feinsignal zu gewährleisten, insbesondere im Augenblick des Einschaltens des Systems.

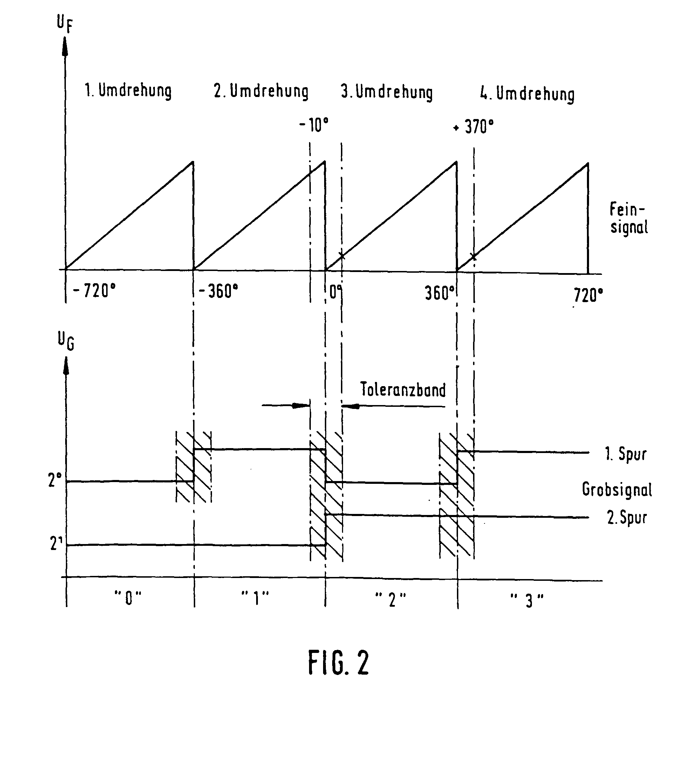

Würde man das Grobsignal nur mittels zweier Codespuren, mit denen ja eigentlich zwei Lenkradumdrehungen codiert werden können, realisieren, gäbe es wegen der größeren Toleranzen innerhalb des Grobsystems Probleme, im Umschaltbereich zwischen zwei Umdrehungen eine eindeutige Zuordnung zwischen Fein- und Grobsignal herzustellen (s. Abb. 2).

Wird z.B. vom Grobsignal eine "2" erkannt und der Feinwinkel liegt im Bereich um 0°, kann der Absolutwinkel, der ja aus dem Fein- und Grobsignal zusammengesetzt werden muß, sowohl der zweiten als auch der dritten Umdrehung zugeordnet werden. Die geforderte Eindeutigkeit ist also in diesem Bereich nicht gegeben. Auch eine logische Verknüpfung zwischen Fein- und Grobsignal liefert keine eindeutigen Ergebnisse.

Die geringere Winkelauflösung des Grobsystems und das damit verbundene größere Toleranzband für das Umschalten zwischen zwei Lenkradumdrehungen ist bedingt durch die Verwendung des gleichen Abtastprinzips wie beim Feinsystem bei gleichzeitiger Unntersetzung des Drehwinkels um den Faktor 4, so daß für die Winkelauflösung innerhalb des Grobsystems mit etwa ± 10° gerechnet werden muß. Außerdem wirken noch weitere toleranzvergrößernde Einflüsse wie Getriebespiel, Lagerspiel usw.

Die Zuordnungsprobleme zwischen Fein- und Grobsignal bei Verwendung von nur zwei Codespuren sind in Abb. 2 dargestellt. Es ist deutlich ersichtlich, daß es unvermeidbare Winkelbereiche gibt, bei denen im Augenblick des Einschaltens kein eindeutiger Absolutwinkel innerhalb des Gesamtwinkelbereichs angegeben werden kann.

Erfindungsgemäß wird das Problem durch Einführen einer dritten Codespur gelöst. Damit liefert das Grobsystem eine 3-Bit-Information für vier Lenkradumdrehungen. Eine mögliche Zuordnung der drei Codespuren des Grobsystems zum absolut messenden Feinsystem ist in Abb. 3a dargestellt. Durch die vorgesehenen drei Codespuren kann mittels dreier dazugehörender Abtaster eine Wertigkeit des Grobsignals im Bereich 0...7 generiert werden. Geht man wieder davon aus, daß es nur möglich ist, die Erfassung der Codeübergänge des Grobsignals innerhalb eines Toleranzbandes von ± 10° vorzunehmen, ist es auch hier noch nicht ohne weiteres möglich, im Bereich der Übergänge eine eindeutige Zuordnung von Fein- und Grobsystem zu gewährleisten.

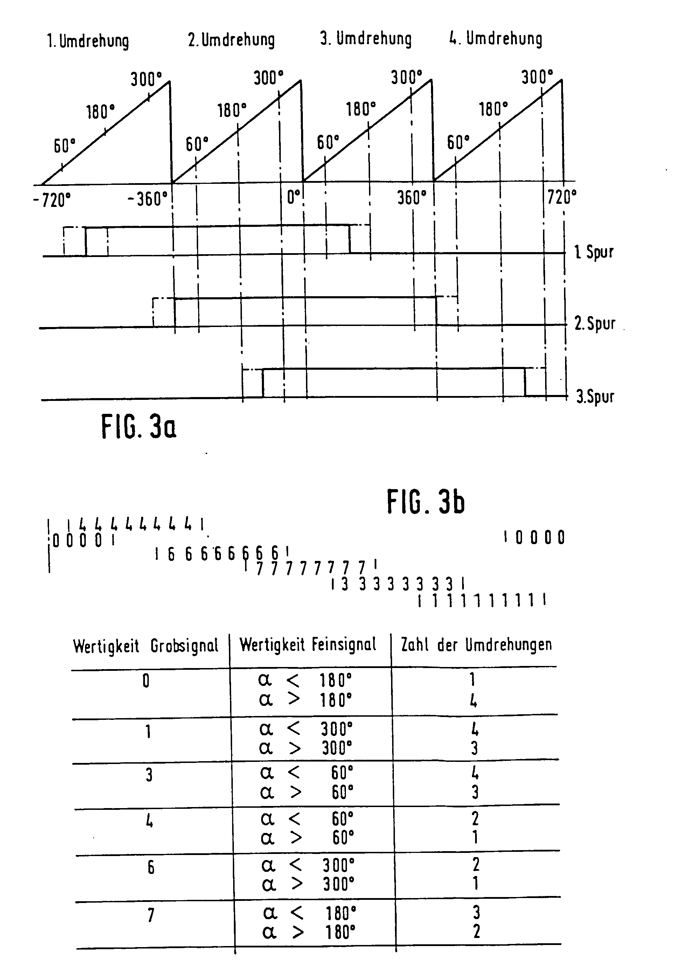

Im Gegensatz zur Zweispurlösung kann jedoch die Eindeutigkeit des Lenkradwinkels unter Zuhilfenahme des Feinsignals eindeutig bestimmt werden, wenn die mehrdeutigen Wertigkeiten des Grobsignals mit den Vorschriften gemäß Abb. 3b verknüpft werden. Diese Verknüpfung geschieht mit einem Mikrocontroller oder einer ähnlichen Vorrichtung, die integraler Bestandteil des Sensors ist.

### Beschreibung des Ausführungsbeispiels

In einem Deckel 1, der fest mit dem Chassis des Fahrzeuges verbunden ist, befindet sich drehbar gelagert eine Codescheibe 2. Die Codescheibe 2 besteht aus einem kreisrunden Blechteil und ist an ihrem Umfang mit Aussparungen versehen, die in ihrer Gesamtheit in Verbindung mit neun Abtastern (neun Magnet-Hall-Schranken) einen Absolutcode (einschrittig verketteter Code, nach jedem Winkelschritt ändert sich genau nur eine Bitposition) ergeben. An der Codescheibe 2 ist weiterhin eine Hohlwelle 3 angebracht, die eine formschlüssige Verbindung mit der Lenksäule ermöglicht, so daß sich die Codescheibe gemeinsam mit der Lenksäule dreht.

Im Deckel 1 befinden sich weiterhin neun stabförmige Magnete 4 im gleichen Winkelabstand voneinander am Umfang verteilt. Die dazugehörenden Hallelemente (im vorliegenden Falle mit integriertem Schaltausgang) befinden sich auf einem gemeinsamen Verdrahtungsträger 6. Sie haben untereinander den gleichen Winkelabstand wie die Magnete. Befindet sich ein Segment des Codeträgers zwischen Magnet und Hallschalter, liefert dieses entsprechende Paar den Wert "0". Jede der neun Magnet-Hall-Schranken repräsentiert eine Bitposition im Code des Absolutsystems.

Durch die neun Magnet-Hall-Sensoren wird ein 9-Bit-Code erzeugt; der eine Winkelauflösung von 0.8 ermöglicht. Diese mögliche Auflösung wird jedoch durch die Schalthysterese der Magnet-Hall-Schranken, deren Temperaturgang und durch die Lagetoleranzen der Magnet-Hall-Anordnung begrenzt. Im Ausführungsbeispiel beträgt die Auflösung 2.5°. Eine weitere Codescheibe 7 besteht ebenfalls aus magnetisch gut leitendem Material und trägt 3 Codespuren, die in radialer Richtung in verschiedenen Abständen (3 Kreisbahnen) angeordnet sind. Der Code dieses Grobsystems wird durch Aussparungen innerhalb dieser Kreisbahnen gebildet. Er wird genau wie beim Feinsystem durch Magnet-Hall-Schranken abgetastet, wobei sich die 3 Hallelemente 8a, b und c ebenfalls auf dem Verdrahtungsträger 6 befinden. Die zu den Hallelementen 8a, b und c Magnete 9a, b und c sind im Boden 10 des Sensors angeordnet. Die Codescheibe 7 bildet gleichzeitig ein innenverzahntes Rad eines Getriebes, das von 3 zweistufigen Räderpaaren 11a, b und c angetrieben wird. Diese werden ihrerseits von einem Zentralrad 12 angetrieben, das integraler Bestandteil der Hohlwelle 3 ist. Im Ausführungsbeispiel dreht sich das mit der Codescheibe 7 verbundene innenverzahnte Rad, die drei zweistufigen Planetenräderpaare 11 sind in im Gehäuseboden 10 feststehenden Zapfen gelagert. Es handelt sich also um ein zweistufiges Standgetriebe, bei dem das Abtriebsrad durch ein innenverzahntes Rad gebildet wird. Die Untersetzung beträgt exakt 4 : 1, um ein "Durchdrehen" des Sensors zu ermöglichen (Vermeidung eines Anschlages). Die Codescheibe 7 dreht sich also nach 4 Lenkradumdrehungen genau einmal. Dadurch ist gewährleistet, daß die Zuordnung zwischen Fein-und Grobsignal nicht verlorengeht, wenn versehentlich der Sensor vor dem Einbau "verdreht" wird.

Auf dem Verdrahtungsträger 6 befindet sich neben den 12 Hallelementen 5a - i und 8a - c auch die Auswerteelektronik 13, im Ausführungsbeispiel ein Mikrocontroller.

Der Mikrocontroller liest über seine Ports den von den Codescheiben 2 und 7 generierten Code, erzeugt mit einem internen Programm den zum Code gehörenden Absolutwinkel, überprüft die ermittelten Werte auf Plausibilität und gibt den errechneten Lenkwinkel über eine serielle Schnittstelle (vorzugsweise in einem standardisierten CAN-Format) an ein übergeordnetes Steuergerät über ein Anschlußkabel 14 weiter.

Als Aufnehmer können auch optische oder induktive Mittel eingesetzt werden, die Codescheiben sind dann entsprechend anzupassen.

## Patentansprüche

1. Sensor zur Erfassung der Winkelstellung einer Welle, mit ersten Mitteln, die eine erste mit der Welle verbundene Codescheibe (2), die vorgebbare Aussparungen aufweist und -n-zugehörige Aufnehmer umfassen und so angeordnet sind, daß sich nach einer Umdrehung der Welle wiederholende Feinsignale entstehen, die einen Code darstellen, mit einer einen Mikrocontroller umfassenden Auswerteelektronik (13) zur Signalverarbeitung und mit zweiten Mitteln zur Erzeugung eines Grobsignales, die eine zweite Codescheibe (7) mit drei Spuren (A, B, C) mit Winkelmarken umfassen, wobei die zweite Codescheibe (7) gegenüber der ersten Codescheibe (2) in vorgebbarem Verhältnis untersetzt drehbar ist und die Erkennung der Winkelstellung durch Verknüpfung der Feinsignale und des Codes des Grobsignales erfolgt, dadurch gekennzeichnet, daß die Welle die Lenksäule eines Kraftfahrzeuges ist, daß das Verhältnis der Untersetzung vier zu eins beträgt, daß die drei Spuren der zweiten Codescheibe (7) mittels dreier Aufnehmer (8a, 8b, 8c) abgetastet werden und so angeordnet sind, daß das Grobsignal eine 3-Bit-Information für vier Lenkradumdrehungen mit einer vorgebbaren Wertigkeit liefert und die Verknüpfung von Grobsignal und Feinsignal so erfolgt, daß sich im Umschaltbereich zwischen zwei Umdrehungen der Lenksäule auftretende mehrdeutige Wertigkeiten des Grobsignales vermieden werden.

2. Sensor nach Anspruch 1, dadurch gekennzeichnet, daß die Codescheiben (2), (7) aus Blech sind und die Aufnehmer Magent-Hall-Schranken sind.

3. Sensor nach Anspruch 1 oder zwei, dadurch gekennzeichnet, daß die erste Codescheibe (2) von neuen Aufnehmern abgetastet wird, zur Erzeugung eines einschrittig verketteten Absolutcodes für das Feinsignal.

4. Sensor nach einem der vorhergehenden Ansprüche, dadurch gekennzeichnet, daß die Untersetzung mittels eines Getriebes erfolgt.

## Claims

1. Sensor for detecting the angular position of a shaft, having first means, which comprise a first code disc (2), which is connected to the shaft and has predefinable cutouts, and - n - associated pick-ups and are arranged in such a way that fine signals repeated after one revolution of the shaft are produced, and represent a code, having evaluation electronics (13) comprising a microcontroller for the purpose of signal processing, and having second means for generating a coarse signal, which comprise a second code disc (7) having three tracks (A, B, C) with angle marks, it being possible for the second code disc (7) to be rotated at a predefinable step-down ratio with respect to the first code disc (2), and the detection of the angular position being carried out by logically combining the fine signals and the code of the coarse signal, characterized in that the shaft is the steering column of a motor vehicle, in that the step-down ratio is four to one, in that the three tracks on the second code disc (7) are scanned by means of three pick-ups (8a, 8b, 8c) and are arranged in such a way that the coarse signal supplies an item of 3-bit information with a predefinable value for four revolutions of the steering wheel, and the logical combination of coarse signal and fine signal is carried out in such a way that ambiguous values of the coarse signal, which occur in the changeover region between two revolutions of the steering column, are avoided.

2. Sensor according to Claim 1, characterized in that the code discs (2), (7) are made of sheet metal, and the pick-ups are magnet/Hall sensors.

3. Sensor according to Claim 1 or 2, characterized in that the first code disc (2) is scanned by new pick-ups in order to generate a single-step linked absolute code for the fine signal.

4. Sensor according to one of the preceding claims, characterized in that the step-down is achieved by means of a gear mechanism.

## Revendications

1. Capteur pour détecter la position angulaire d'un axe comprenant des premiers moyens avec un premier disque codé (2) par des découpes prédéterminées, ce disque étant relié à l'axe et (n) capteurs correspondants, disposés pour avoir après une rotation de l'axe des signaux fins qui se répètent et représentent un code,
une électronique de traitement comprenant un microprocesseur (13) pour le traitement du signal et
des seconds moyens pour générer un signal grossier, comprenant un second disque codé (7) avec trois pistes (A, B, C) munies de repères angulaires, le second disque codé étant dans un rapport de démultiplication prédéterminé de rotation par rapport au premier disque codé (2), et la détection de la position angulaire se faisant par combinaison des signaux fins et du code du signal grossier,
caractérisé en ce que
l'axe est la colonne de direction d'un véhicule automobile, le rapport de la démultiplication est de 4/1,
les trois pistes du second disque codé (7) sont détectées à l'aide de trois capteurs (8a, 8b, 8c) et sont disposées pour que le signal grossier donne une information à 3 bits pour quatre tours de volant, avec une valeur prédéterminée et la combinaison du signal grossier et du signal fin se fait pour éviter, dans la plage de commutation entre deux tours de la colonne de direction, la polyvalence du signal grossier.

2. Capteur selon la revendication 1,
caractérisé en ce que
les disques codés (2, 7) sont en tôle et les capteurs sont des barrières aimant/élément Hall.

3. Capteur selon la revendication 1 ou 2,
caractérisé en ce que
le premier disque codé (2) est détecté par neuf capteurs pour générer, pour le signal fin, un code absolu combiné à un pas.

4. Capteur selon l'une des revendications précédentes,
caractérisé en ce que
la démultiplication est assurée par une transmission.
